# EUROPÄISCHE PATENTSCHRIFT

(11) **EP 3 631 308 B1**
(45) Veröffentlichungstag und Bekanntmachung des Hinweises auf die Patenterteilung: **11.09.2024**
(21) Anmeldenummer: 18729082.0
(22) Anmeldetag: 30.05.2018
(51) Int. Cl.: F24F 3/14, F24F 5/00, B01D 53/02, C09K 5/04, F24F 12/00, B01D 53/26, F25B 21/00, F28D 9/00, F28F 13/18

(54) **KLIMATISIERUNGSVERFAHREN UND -VORRICHTUNG**
AIR CONDITIONING METHOD AND SYSTEM
MÉTHODE DE CLIMATISATION ET CLIMATISEUR

(30) Priorität: 02.06.2017 EP 17174210
(43) Veröffentlichungstag der Anmeldung: 08.04.2020
(73) Patentinhaber: BASF SE, 67056 Ludwigshafen am Rhein (DE)
(72) Erfinder: NOERENBERG, Ralf, 67059 Ludwigshafen (DE); OPPER, Walter, 67056 Ludwigshafen (DE); KARWACKI, Lukasz, 67056 Ludwigshafen (DE); WEICKERT, Mathias, 67056 Ludwigshafen (DE); MUELLER, Ulrich, 67056 Ludwigshafen (DE)
(74) Vertreter: BASF IP Association
(86) Internationale Anmeldenummer: PCT/EP2018/064209
(87) Internationale Veröffentlichungsnummer: WO 2018/220027

(56) Entgegenhaltungen:
- EP-A1- 1 408 286
- EP-A1- 2 675 856
- EP-A2- 2 230 288
- EP-A2- 2 345 853
- EP-A2- 2 400 231
- DE-A1- 4 220 715
- US-A1- 2013 192 281

## Beschreibung

Die Erfindung betrifft ein Verfahren zur Konditionierung von Fluiden, insbesondere zum Kühlen und/oder Trocknen eines Luftstroms, eine Klimatisierungsvorrichtung und ein Fassadenelement beinhaltend eine integrierte Klimatisierungsvorrichtung.

Klimaanlagen sind essentielle Bestandteile der heutigen Gebäudetechnik. Im Zusammenspiel mit der Verschattung und der Glastechnik erzeugen sie unabhängig vom Außenklima ein gesundes Arbeitsklima im Innern, das durch mittlere relative Luftfeuchtigkeit und gemäßigte Temperaturen zwischen 20 und 26°C charakterisiert ist. Mittlerweile ist der Energiebedarf zum Betreiben des Gebäudebestands auf ca. 40% des gesamten Energieverbrauchs der Menschheit gestiegen, was neben anderen Gründen, z. B. der schlechten Isolierung geheizter Gebäude, zu einem großen Teil auch an den Klimaanlagen liegt. Durch die starke Urbanisierung in feuchten und tropischen Klimaregionen und dem damit verbundenen Bau von Hochhäusern, die Klimaanlagen zum Betrieb benötigen, steigt die Notwendigkeit, energieeffiziente Klimaanlagen zu entwickeln. Dabei hat gerade in diesen Klimaregionen die Trocknung der Luft den größten Energiebedarf, weil mit der derzeitig dominierenden Kompressortechnologie die Luft unterkühlt wird, bis die erforderliche absolute Luftfeuchtigkeit erreicht wird. Diese Kompressortechnologie verwendet als Kältemittel üblicherweise halogenierte, bevorzugt teilfluorierte Kohlenwasserstoffe, die aufgrund ihres Klimagefährdungspotenzials unter Druck stehen. Auch alternative Kältemittel wie Kohlendioxid sind nicht besser in dieser Beziehung. Die Notwendigkeit der Wartung von Kompressoren, z.B. das Sicherstellen der Leichtgängigkeit beweglicher Teile oder Ausbalancieren von Unwuchten, Nachfüllen von Betriebs- und Verbrauchsmitteln, hat zu einer Bevorzugung einer zentralen Installation geführt und bisher die Entwicklung von dezentralen Klimaanlagen, die ins Gebäude integriert sind und die ein quasipersonalisiertes Klima ermöglichen, verhindert. Splitgeräte für den nachträglichen Einbau sind dagegen im Markt etabliert, insbesondere im privaten Einfamilienhaus.

Auch in mobilen Anwendungen wie Zügen oder Autos, in denen Klimaanlagen zur Kühlung und Entfeuchtung eingesetzt werden, spielt der Einsatz von elektrischer Energie aus den Bordnetzen eine zunehmend bedeutendere Rolle; bei Elektroautos steht der Betrieb der Klimaanlage in direkter Konkurrenz zur Reichweite des Fahrzeugs.

Ein effizienterer Prozess wäre das hybride Klimatisieren, wobei der Trocknungsschritt und der Kühlungsschritt separat erfolgen. Für das Trocknen der Luft gibt es absorptive Verfahren, bei denen die Hygroskopie von z. B. Lithiumbromidlösungen ausgenutzt wird, Luftfeuchtigkeit zu binden; die Recyclierung erfolgt über einen Evaporierungsschritt. Wegen der Aggressivität der besten Lösungen, Lithiumbromid und -chlorid, ist für die technische Realisierung die Verwendung besonderer, nicht korrodierender Materialien notwendig, die das System teuer und wartungsaufwändig machen. Alternativ können Adsorptionssysteme verwendet werden, bei denen Luftfeuchtigkeit in einem meist festen Material wie Zeolithen oder Silikagel gebunden wird - in der Forschung (z.B. Y.D. Tu et al, nature 7, 40437; DOI 10.1038/Srep40437) werden auch Formulierungen aus Lithiumsalzen in nanoporösem Silika beschreiben; die Recyclierung erfolgt über Erwärmen der Adsorber. Die Reaktion von Wasser an den Trocknungsmitteln setzt eine große Energiemenge frei, die die Luft und das Material aufheizen und zu zusätzlicher Kühllast führt. Gleichzeitig wird Energie benötigt, um den Adsorber wieder zu regenerieren, so dass der Energieaufwand einer solchen Klimaanlage noch weiter steigt. Durch intelligente Prozessführung mit einem sogenannten Trocknungsrad, bei dem der Adsorber als dünne Schicht auf einem luftdurchströmten, sich drehenden Rad montiert ist, das während eines Teils der Umdrehung mit heißer Luft regeneriert wird, lässt sich die Aufheizung und der für die Regenierung zusätzlich benötigte Energiebedarf reduzieren, wie zB in der DesiCool ^{®}-Anlage von Munters. Die Übertrocknung der Luft macht allerdings eine Rückbefeuchtung der Luft notwendig, die durch evaporative Kühlung den Kühlstrom reduziert, aber durch die Verwendung von flüssigem Wasser hygienische Bedenken wegen der möglichen Einnistung und Vermehrung von gesundheitsschädlichen Bakterien auslösen kann. Der apparative Aufwand dieser Klimaanlagen mit mehreren drehenden Teilen birgt die Gefahr eines großen Wartungsaufwands.

EP 2 345 853 beschreibt ein Verfahren und eine Vorrichtung zum Erwärmen und Führen eines Luftstroms, welcher zwei oder mehr Sorptionswärmetauscher zum Zweck der direkten Frischluftkonditionierung mit Luft versorgt. Das offenbarte Verfahren umfassend folgende Schritte: (i) Strömen des Prozessfluids durch die Sorptionskanäle eines ersten adsorptiven Wärmetauschers, (ii) Trocknen des Prozessfluids im ersten absorptiven Wärmetauscher, (iii) Paralleles Strömen des Regenerationsfluids durch die Wärmetauscherkanäle des ersten absorptiven Wärmetauschers, (iv) Aufnahme der Adsorptionswärme durch das Regenerationsfluid, (v) Strömen des feuchten Regenerationsfluids in einen Außenbereich.

EP 1 408 286 beschreibt eine Klimaanlage bestehend aus zwei adsorptiven Luft-Luft-Wärmetauschern oder einem sich drehenden adsorptiven Wärmerad und einer Kompressionseinheit. Es wird beschrieben, dass im Adsorptionsmodus die Außenluft in einem adsorptiven Wärmetauscher entfeuchtet und anschließend in der Kompressionseinheit gekühlt wird. Es wird ferner beschrieben, dass der adsorptive Wärmetauscher während des Adsorptionsmodus von weiterer Außenluft durchströmt wird, die die latente Wärme aufnimmt und somit die Erwärmung des Wärmetauschers und der zu konditionierenden Innenluft begrenzt. Diese erwärmte Außenluft wird im Regenerationsmodus in der Kompressionseinheit weiter erwärmt, durchläuft den beladenen adsorptiven Wärmetauscher und trägt den verdunstete Wasserdampf nach draußen. Wenn der adsorptive Wärmetauscher als Wärmerad ausgelegt wird, kann der Adsorptions- und Regenerationsmodus als Gegenstromprozess ausgelegt werden. Als Adsorbermaterial werden Zeolithe, Silikagel und Anionenaustauschharz offenbart.

EP 2 400 231 beschreibt ein Verfahren zum Betrieb einer offenen Sorptionswärmetauscheranlage mit mindestens zwei Sorptionswärmetauschern, wobei die Sorptionswärmetauscher wechselweise in einem Konditionierungsmodus und einem Regenerationsmodus betrieben werden. Gekennzeichnet ist das Verfahren durch die folgenden Schritte: Trocknen und Kühlen eines Außenluftteilstroms, Zuführen des Außenluftteilstroms in eine zu klimatisierende Umgebung, weiteres Kühlen mittels einer aus der zu klimatisierenden Umgebung abzuführenden Abluft, Erhitzen und Regenerieren eines zweiten Sorptionswärmetauschers.

DE 42 20 715 beschreibt ein Verfahren und eine Vorrichtung zum Konditionieren von Luft unter Verwendung einer auf einem Trockenmittel basierenden Klimaanlage. Es wird die Verwendung von zwei getrennten Trockenmittelvorrichtungen und eines indirekten Verdampfungskühlers offenbart, der sowohl eine nasse als auch eine trockene Seite für den Luftdurchfluss besitzt. Die Regenerationsluft der ersten Trockenmittelvorrichtung wird zuerst durch die nasse Seite des indirekten Verdampfungskühlers geleitet, wo sie befeuchtet und erhitzt wird. Diese Luft wird dann entfeuchtet, indem sie durch die zweite Trockenmittelvorrichtung geführt wird, die mit einem hohen Feuchtigkeitsgehalt arbeitet.

EP 2 385 318 beschreibt eine Klimaanlage bestehend aus einem adsorptiven Luft-Wasser-Wärmetauschern und einem Luftwärmetauscher, der ohne eine Kompressoreinheit auskommt. Das Problem der Kondenswasser-Bildung wird dadurch gelöst, dass in dem adsorptiven Wärmetauscher die Luftfeuchtigkeit als Adsorbat gespeichert wird und in einem nachfolgenden Trocknungsschritt wieder als Luftfeuchtigkeit freigesetzt wird. Die Probleme mit der Kapazität der Trockner, der Wärmeentwicklung durch Adsorptionsenthalpie und der Übertrocknung der Luft wird durch Beimischung von feuchterer, temperierter Innenluft zu der getrockneten Luft reduziert, bevor die gesamte Luftmenge durch eine Kaltwasserleitung temperiert wird. Die Kühlung im Luftwärmetauscher wird mit Wasser bei 15 °C durchgeführt. Zum Austragen des Adsorbats wird im Regenerationsmodus Innenluft durch ein Heizelement aufheizt und durch den Regenerationsteil des Trocknungsrads geleitet wird. Als Adsorbermaterial werden Zeolithe, Silikagel, Aktivkohle oder organische Polymere mit einer hydrophilen funktionalen Gruppe offenbart. Nachteilig an dem in EP 2 385 318 offenbarten Verfahren ist, dass zwingend die Außenluft bei der Konditionierung mit einem Teil der vorhandenen Innenluft gemischt werden muss, wodurch sich Geruchstoffe und Krankheitserreger anreichern können.

US 6,199,392 beschreibt eine Klimaanlage bestehend aus einem sich drehenden adsorptiven Wärmerad mit zwei Fließpassagen, mehreren Wärmetauschern und einer Kompressoreinheit. Es wird beschrieben, dass in der Konditionierungsrichtung die Außenluft in dem adsorptiven Wärmerad entfeuchtet und anschließend in der Kompressionseinheit gekühlt wird und in der Regenerationsrichtung Außenluft oder verbrauchte Innenraumluft in der Kompressionseinheit erhitzt und dann teilweise die eine Hälfte des beladenen Abschnitts des Wärmerads durchläuft und teilweise weiter erhitzt wird und die andere Hälfte des beladenen Abschnitts des Wärmerads durchläuft. Durch diese stufenweise Regeneration kann mit reduziertem Energieaufwand ein hoher Regenerationsgrad erreicht werden, so dass die Kapazität der Trocknungsräder erhöht werden kann. Es werden keine Adsorbermaterial namentlich genannt. Nachteilig ist, dass im adsorptiven Wärmerad die Adsorptionswärme nicht genutzt wird. Außerdem ist die getrocknete Luft zu trocken und muss für die Verwendung im Raum befeuchtet werden.

Damit sich der absorptive Wärmetauscher bei der Adsorption nicht erwärmt, wird in DE 10 2009 050 050 vorgeschlagen, einen Sorptionswärmetauscher einzusetzen, der eine Sorptionsseite und eine Kühlseite aufweist, so dass während der Adsorption die entstehende Adsorptionswärme auf ein Kühlfuid, z.B. einen als Aerosol ausgebildeten Wärmeträger, übertragen wird. Nachteilig ist, dass die Adsorptionswärme nicht genutzt wird.

In ähnlichem Sinn wird von Kubota et al. (Appl. Thermal Eng. 122 (2017) 618-625) ein Versuchsaufbau beschrieben, in dem mit einem adsorbatbeschichteten Luft-Luft-Wärmetauscher die feuchte Außenluft getrocknet werden kann. Die in der Schrift veröffentlichten Beispiele zeigen, dass durch einen mit Adsorptionsmittel beschichteten Wärmetauscher die Luft getrocknet werden kann. Die Veröffentlichung beschreibt jedoch keinen vollständigen Aufbau, mit dem ein kontinuierlicher Prozess zur Trocknung und Temperierung der Außenluft inklusive Regeneration der Adsorber möglich ist. Ferner wird eine mögliche Integration der Adsorptionswärme in den Wärmekreislauf der Vorrichtung nicht thematisiert. Die in der Veröffentlichung beschriebene lange Leitung in der Zuführung der Außenluft in den beschichteten Wärmetauscher steht außerdem einer kommerziellen Nutzung, die eine kompakte Ausführung voraussetzt, im Wege.

Eine Herausforderung der Adsorptionsmittel-basierten Klimaanlagen ist ferner die hohe Temperatur, die zu einer effizienten Regenerierung des Adsorptionsmittels benötigt wird. Bei den üblicherweise verwendeten Zeolithen sind dies 140 bis 200 °C. Einige Veröffentlichung beschreiben, dass eine Regenerierung der Adsorber bei tieferen Temperaturen möglich ist, jedoch müssen in diesem Fall größere Mengen Luft und/oder bereits vor-getrocknete Luft verwendet werden (Kubota et al., Appl. Thermal Eng. 122 (2017) 618-625, und Wang et al. Intern. Journal of Thermal Science 126 (2018) 13-22).

In Energy Procedia 78 (2015) 3471-3476 beschreiben Portia Murray et al. eine dezentrale Klimatisierende Lüftungseinrichtung unter Verwendung von einem rotierenden Trocknungsrad und einem rotierenden Wärmeübertragungsrad. Die Trocknung der Luft (latente Kühlung) findet bei diesem Aufbau allerdings ausschließlich durch eine Kühlwasserleitung statt.

Ferner ist problematisch, dass die Adsorbereigenschaft des thermodynamische Trocknungsgleichgewicht "Wasser (gasförmig) zu im Adsorptionsmittel gebundenes Wasser" bei den im Stand der Technik genannten Adsorptionsmitteln stark auf der Seite des gebundenen Wassers liegen, so dass es zu einer Übertrocknung kommt, die dann in einem weiteren Schritt durch Zumischung von Wasser kompensiert werden muss. Dieser zweite Schritt ist nicht nur apparativ aufwendig und energieintensiv, dieser Schritt birgt auch die Gefahr eines möglichen Einnistens und Vermehrens von gesundheitsschädlichen Bakterien. Des Weiteren wird bei den Adsorptionsmittel-basierten Klimaanlagen eine hohe Adsorptionswärme frei, die bislang nur ineffizient in den Wärmekreislauf integriert wird.

WO 99/36733 offenbart als Trocknungsmittel poröse Aluminiumphosphate mit der allgemeinen chemischen Formel Al2O3k(P2O5) mit k=1.0 ± 0.2, sogenannte Sapo-Zeolithe, die sich bei 120-140°C regenerieren lassen und so die Möglichkeit einer energie-effizienten Klimaanlage bieten.

In der EP 2 230 288 wird die Verwendung von poröses metallorganisches Gerüstmaterial, sogenannte MOFs, als Adsorptionsmaterial für Kälte/Wärmemaschine beschrieben. Im Vergleich zu den üblicherweise verwendeten Zeolithen weisen diese MOFs höhere Kapazitäten und geringere Regenerationstemperaturen auf.

US 2013/192281 beschreibt einen absorptiven Luft-Luft-Kreuzwärmetauscher für die Klimatisierung von Elektroautos, der mit MOF beschichtete Sorptionskanäle und unbeschichtete Wärmetauscherkanäle aufweist.

Ferner wird in der Europäischen Patentanmeldung mit der Anmeldenummer 15195166.2 die Verwendung von porösen metallorganischen Gerüstmaterialien als Adsorptionsmaterial in einem Ventilationssystem offenbart.

Aufgrund des generellen großen Bedarfs an Klimaanlagen und des immer noch hohen Energiebedarfs für den Betrieb dieser Anlagen besteht ein großes Interesse an energie-effizienteren Klimaanlagen, die vorteilhaft apparativ einfach gestaltet sind und ferner vorteilhaft kompakt aufbaubar sind.

Die Aufgabe der vorliegenden Erfindung ist demnach, einen thermodynamisch günstigen Betrieb einer Klimatisierungsvorrichtung zu realisieren, indem möglichst weder eine Übertrocknung noch eine Überkühlung unnötige Energie verbraucht. Es soll eine möglichst isotherme Prozessführung der Trocknung realisiert werden, so dass der nachfolgende Kühlbedarf reduziert wird. Ferner soll die Adsorptionswärme in den Wärmekreislauf der Vorrichtung integriert werden. Ferner soll die energieintensive Regeneration so effektiv wie möglich realisiert werden. Ferner soll ein vollständiges System, das sowohl adsorptive Trocknung, energieeffiziente Regenerierung als auch geringen Wartungsaufwand und die Vermeidung von flüssigem Wasser kombiniert, aufgezeigt werden.

Weiter liegt der vorliegenden Erfindung die Aufgabe zugrunde, eine Klimatisierungsvorrichtung aufzuzeigen, die eine effektive Arbeitsweise bei reduziertem apparativen Aufwand und wenig mechanischen Elementen realisiert. Ferner soll eine einfachere Steuerung realisierbar sein.

Weiter liegt der vorliegenden Erfindung die Aufgabe zugrunde, eine Klimatisierungsvorrichtung aufzuzeigen, in der die Luftströme - Prozessluft und Innenabluft - getrennt voneinander gehalten werden, so dass eine 100 % Frischluftzufuhr gewährleistet werden kann.

Weiter liegt der vorliegenden Erfindung die Aufgabe zugrunde, eine Klimatisierungsvorrichtung aufzuzeigen, die kompakt und wartungsarm ist.

Weiter liegt der vorliegenden Erfindung die Aufgabe zugrunde, eine Klimatisierungsvorrichtung aufzuzeigen, die ohne Kompressoren auskommt.

Eine oder mehrere der oben genannten Aufgaben werden erfindungsgemäß durch ein Verfahren mit den Merkmalen von Anspruch 1, eine Klimatisierungsvorrichtung mit den Merkmalen von Anspruch 7 und eine Verwendung der Klimatisierungsvorrichtung gemäß Anspruch 14 gelöst. Bevorzugte Ausführungsformen des Verfahrens sind in den Ansprüchen 2-6 definiert, bevorzugte Ausführungsformen der Klimatisierungsvorrichtung sind in den Ansprüchen 8-13 definiert. Weiter bevorzugt wird ein Fassadenelement umfassend eine Klimatisierungsvorrichtung gemäß Anspruch 15 vorgeschlagen,

Gemäß der Erfindung umfasst das Verfahren zum Konditionieren eines Fluids, insbesondere zum Trocknen und/oder Kühlen von Außenluft, die folgenden Schritte:
(a) Strömen des Prozessfluids, vorteilhaft Außenluft, durch die Sorptionskanäle eines ersten absorptiven Wärmetauschers, bevorzugt Kreuzstromwärmetauschers,
(b) Trocknen des Prozessfluids im ersten absorptiven Wärmetauscher,
(c) Strömen des getrockneten Prozessfluids zu der kalten Seite einer Kälte-Quelle
(d) Kühlen des getrockneten Prozessfluids in einer Kälte-Quelle,
(e) Strömen des getrockneten und gekühlten Prozessfluids in den zu konditionierenden Bereich,
(f) Paralleles Strömen des Regenerationsfluids, vorteilhaft Abluft aus dem zu konditionierenden Bereich, durch die Wärmetauscherkanäle des ersten absorptiven Wärmetauschers,
(g) Aufnahme der Adsorptionswärme durch das Regenerationsfluid,
(h) Strömen des erwärmten Regenerationsfluids zu der warmen Seite einer Wärme- Quelle,
(i) Weiteres Erwärmen des Regenerationsfluids in der Wärme- Quelle,
(j) Strömen des erhitzten Regenerationsfluids durch die Sorptionskanäle eines zweiten absorptiven Wärmetauschers, vorteilhaft Kreuzstromwärmetauschers,
(k) Verdampfen der im zweiten absorptiven Wärmetauscher eingelagerten Adsorbate und Aufnahme dieser Adsorbate durch das Regenerationsfluid,
(l) Strömen des feuchten Regenerationsfluids in einen Außenbereich
(m) Unterbrechen des Strömens des Prozessfluids und des Regenerationsfluids in den ersten adsorptiven Wärmetauscher,
(n) Strömen des Prozessfluids durch die Sorptionskanäle eines zweiten absorptiven Wärmetauschers,
(o) Trocknen des Prozessfluids im zweiten absorptiven Wärmetauscher,
(p) Strömen des getrockneten Prozessfluids zu der kalten Seite einer Kälte-Quelle,
(q) Kühlen des getrockneten Prozessfluids in einer Kälte-Quelle,
(r) Strömen des getrockneten und gekühlten Prozessfliuds in den zu konditionierenden Bereich,
(s) Paralleles Strömen des Regenerationsfluids durch die Wärmetauscherkanäle des zweiten absorptiven Wärmetauschers,
(t) Aufnahme der Adsorptionswärme durch das Regenerationsfluid,
(u) Strömen des erwärmten Regenerationsfluids zu der warmen Seite einer Wärme-Quelle,
(v) Weiteres Erwärmen des Regenerationsfluids in der Wärme-Quelle,
(w) Strömen des erhitzten Regenerationsfluids durch die Sorptionskanäle eines ersten absorptiven Wärmetauschers,
(x) Verdampfen des im ersten absorptiven Wärmetauscher eingelagerten Adsorbate und Aufnahmes dieser Adsorbate durch das Regenerationsfluid,
(y) Strömen des feuchten Regenerationsfluids in einen Außenbereich.

Die Sorptionskanäle weisen Adsorptionsmaterial auf. Die Wärmetauscherkanäle weisen vorteilhaft weniger als 5% Adsorptionsmaterial im Bezug auf die Beladung der Sorptionskanäle mit Adsorptionsmaterial auf. Vorteilhaft weisen die Wärmetauscherkanäle kein Adsorptionsmaterial auf.

Vorteilhaft weist das Adsorptionsmaterial eine Dichte von 0,2 bis 2 g/cm³ auf, bevorzugt 0,3 bis 1,5 g/cm³, insbesondere 0,3 bis 1 g/cm³.

Die Strömungsgeschwindigkeit wird vorteilhaft in Abhängigkeit vom Gesamt-Strömungsquerschnitt des Wärmetauschers bestimmt. Typische Strömungsgeschwindigkeiten sind 30 bis 150 m³/h, vorteilhaft 50 bis 100 m³/h, für dezentrale, kleine Klimaanlagen. Typische Strömungsgeschwindigkeiten sind 1000 bis 30000 m³/h, vorteilhaft 1500 bis 20000 m³/h, für zentrale, große Klimaanlagen.

Vorteilhaft wird das Prozessfluid vor dem Durchströmen des Wärmetauschers gefiltert und von Partikeln und/oder Tröpfchen gereinigt.

Vorteilhaft wird das Prozessfluid vor dem Durchströmen des Wärmetauschers über eine Vorrichtung zur Schalldämpfung geleitet, die die Außengeräusche minimiert.

Als Wärme- bzw. Kälte-Quellen können, Wärmepumpen auf Basis von Kompressoranlagen, thermisch oder elektrisch angetriebenen, bevorzugt solarthermisch angetriebenen Absorptions- oder Adsorptionsanlagen oder Wasserleitungen, optional mit Heizvorrichtungen, eingesetzt werden, vorteilhaft Wasserleitungen und Adsorptionswärmepumpen oder Kombinationen davon. Die Heizvorrichtungen können vorteilhaft elektrisch oder solarthermisch betrieben werden. Zu den geeigneten Heiz- und Kühlvorrichtungen gehören außerdem rein elektrisch betriebene Bauteile wie beispielsweise Peltierelemente, Magnetokalorische Elemente, elektrische Draht- und Flächenheizungen. Unter "kalter Seite der Wärme-Kälte-Quelle" wird der Kaltpol verstanden, bei Kompressoranlagen die Verdampfer-Seite. Unter "warmer Seite der Wärme-Kälte-Quelle" wird der Warmpol verstanden, bei Kompressoranlagen die Kondensator-Seite.

Zur Konditionierung eines Fluids, bevorzugt von Außenluft, werden mindestens zwei Sorptionswärmetauscher benötigt, um einen quasikontinuierlichen Betrieb zu gewährleisten. In einem der zwei Sorptionswärmetauscher findet die Adsorption, d.h. Entfeuchtung statt, während der andere Sorptionswärmetauscher parallel regeneriert wird. Es befindet sich danach jeweils mindestens ein Sorptionswärmetauscher in der Adsorptionsphase und mindestens ein Sorptionswärmetauscher in der Regenerationsphase.

Da die Sorptionswärmetauscher nur eine bestimmt Menge Feuchtigkeit aufnehmen können und die Geschwindigkeit der Adsorption mit steigender Beladung abnimmt, wechseln die Phasen Adsorption und Regeneration vorteilhaft zyklisch. Somit kann ein quasikontinuierlicher Betrieb sichergestellt werden.

Durch Einstellung der Zykluszeit kann in Abhängigkeit vom gewählten Sorptionsmaterial und der Größe der adsorptiven Wärmetauscherflächen die gewünschte Konditionierung eingestellt und somit an das entsprechende Klima angepasst werden. Die gewünschte Konditionierung ist in den unterschiedlichen Klimaregionen anders, z.B. überwiegt in küstennahen Gebieten die Entfeuchtung, in inländischen Gebieten die Kühlung. Typischerweise liegt der Zyklus bei 5 min bis 1h. Vorteilhaft werden Sensoren, die Temperatur und/oder Luftfeuchtigkeit messen können, verwendet, um die Umschaltzeit auf das aktuelle Wetter zu optimieren. Vorteilhaft sind diese Sensoren in den Leitungen verbaut.

Vor der Adsorptionsphase kann ggf. der regenerierte absorptive Wärmetauscher gekühlt werden. Diese Kühlung kann durch ein Durchströmen von einem Regenerationsfluids, vorteilhaft Abluft aus dem zu konditionierenden Bereich, oder durch ein Durchströmen von getrockneten und gekühlten Prozesssfluid, d.h. die konditionierte Luft, erfolgen. Ferner könnte diese Kühlung auch durch ein Durchströmen mit der Außenluft erfolgen. Vorteilhaft werden ausschließlich die Wärmetauscherkanäle des zu kühlenden Wärmetauschers durchströmt. Diese Kühlphase dauert vorteilhaft 1 min bis 5 min. Vorteilhaft braucht diese Kühlphase ungefähr 1 bis 20 % eines Zyklus. In der Kühlphase wird der regenerierte absorptive Wärmetauscher vorteilhaft von einer Temperatur von 80 bis 100°C auf eine Temperatur von 25 bis 35°C gekühlt.

Vorteilhaft wird das Strömen des Prozessfluids durch die Sorptionskanäle eines ersten absorptiven Wärmetauschers und das Strömen des Regenerationsfluids durch die Wärmetauscherkanäle des ersten absorptiven Wärmetauschers vor der Kühlphase des zweiten Wärmetauschers unterbrochen.

Bevorzugt wird nach den Schritten (m) bis (y) erneut das Strömen des Prozessfluids und des Regenerationsfluids unterbrochen. Ferner wird vor einem erneuten Durchgang der Schritte (a) bis (l) der erste absorptive Wärmetauscher gegebenenfalls gekühlt.

Vorteilhaft weist das Prozessfluid, insbesondere Außenluft, eine Temperatur von 10 bis 50°C, bevorzugt von 25 bis 35°C auf und eine relative Luftfeuchtigkeit von 40 bis 100% auf. Nach der Adsorption im absorptiven Wärmetauscher weist das Prozessfluid vorteilhaft eine Temperatur von 20 bis 45°C, bevorzugt von 25 bis 40°C, auf und eine relative Luftfeuchtigkeit von 25 bis 35%, bevorzugt von 28 bis 33% auf. Nach der Konditionierung durch die kalte Seite der Wärme-Kälte-Quelle weist das Prozessfluid vorteilhaft eine Temperatur von 18 bis 25°C, bevorzugt von 22 bis 24°C, auf und eine relative Luftfeuchtigkeit von 40 bis 55%, bevorzugt von 45 bis 55%, auf.

Vorteilhaft weist das Regenerationsfluid, vorteilhaft Abluft aus dem zu konditionierenden Bereich, eine Temperatur von 25 bis 30°C auf und eine relative Luftfeuchtigkeit von 50 bis 80%, bevorzugt von 60 bis 75%, auf. Nach der Wärmeübertragung im absorptiven Wärmetauscher weist das Regenerationsfluid vorteilhaft eine Temperatur von 25 bis 45°C, bevorzugt von 25 bis 40°C, auf und eine relative Luftfeuchtigkeit von 30 bis 70%, bevorzugt von 35 bis 60%, auf. Nach der Konditionierung durch die warme Seite der Wärme-Kälte-Quelle weist das Regenerationsfluid vorteilhaft eine Temperatur von 60 bis 100°C, bevorzugt von 70 bis 95°C, auf und eine relative Luftfeuchtigkeit von 1 bis 10%, bevorzugt von 3 bis 7%, auf. Nach der Regenerierung des zweiten absorptiven Wärmetauschers weist das Regenerationsfluid vorteilhaft eine Temperatur von 30 bis 50°C, bevorzugt von 33 bis 45°C, auf und eine relative Luftfeuchtigkeit von 70 bis 95%, bevorzugt von 80 bis 95%, auf.

Optional kann dem getrockneten und gekühlten Prozessfluid, d.h. dem konditionierten Prozessfluid, bevor dieses in den zu konditionierenden Bereich strömt, Innenluft zugemischt werden. Vorteilhaft liegt bei einer solchen Zumischung das Verhältnis getrocknetes und gekühltes Prozessfluid zu Innenluft bei 1 bis 60, bevorzugt von 10 bis 40.

Vorteilhaft wird jedoch zu 100 % getrocknetes und gekühltes Prozessfluid in den zu konditionierenden Bereich eingebracht.

Optional durchläuft das getrocknete und gekühlte Prozessfluid eine Adsorptionsvorrichtung vor dem Einbringen in den zu konditionierenden Bereich. Durch diese Adsorptionsvorrichtung können Schwankungen in der relativen Luftfeuchtigkeit ausgeglichen werden.

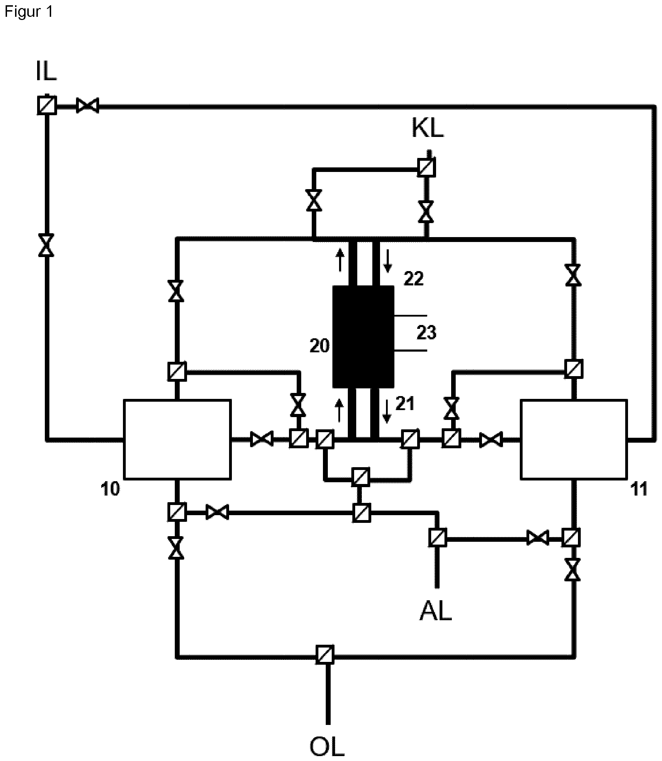

Eine mögliche Verschaltung der verschiedenen Fluidströme ist in der Figur 1 gezeigt. Erfindungsgemäße Vorrichtungen zeichnen sich dadurch aus, dass sie außer elektrisch ansteuerbaren Ventilen oder Lüftungsklappen keine beweglichen, insbesondere rotierenden Teile enthalten. Die absorptiven Wärmetauscher, bevorzugt Kreuzstromwärmetauschers, in denen die Trocknung der Luft stattfindet, und die Wärme-Kälte-Quelle, in denen die Temperierung der Zuluft und der Regenerationsluft stattfinden, werden ausschließlich über Verbindungsstücke, z.B. feste Rohrleitungen oder bewegliche Schläuche, miteinander verbunden.

Vorteilhaft sind die erfindungsgemäßen Vorrichtungen besonders kompakte Geräte. Unter "kompakt" wird dabei eine besonders kleine Bauform verstanden, charakterisiert durch eine Langdimension von 300 cm bis 60 cm, bevorzugt 200 cm bis 80 cm, bevorzugt 120 cm bis 100 cm, einer zweiten Langdimension von 200 cm bis 50 cm, bevorzugt 120 cm bis 60 cm, bevorzugt 100 cm bis 70 cm und einer dritten Dimension von 100 cm bis 25 cm, bevorzugt 50 cm bis 25 cm, bevorzugt 35 cm bis 25 cm.

Bei der Verwendung von engen Rohrleitungen, d.h. der durchströmende Querschnitt ist mindestens 30 % kleiner als der Strömungsquerschnitt des Wärmetauschers, ist es vorteilhaft, das Strömungsverhalten der Luft durch den Wärmetauscher zu optimieren, damit alle Kanäle mit ähnlichem Druck durchströmt werden. Dazu werden vorteilhaft direkt, d.h. vorteilhaft im Abstand von 1 bis 10 cm, vor den Wärmetauschern Elemente eingefügt, die die Luftströmung auffächern und/oder laminarisieren. Beispielhaft sind Filter, Gitter und/oder Raster genannt, die ggf. in Verbindung mit konischen Verbindungsstücken verwendet werden können, oder mit Ventilen und/oder Lüftungsklappen ausgerüstete Mehrwegesysteme, die systematisch unterschiedliche Kanalsystem eines Wärmetauschers während eines Zyklus ansprechen können. Die in der Literatur beschriebenen langen Zuleitungen, die den Luftstrom laminarisieren und auf die Passage durch den Wärmetauscher vorbereiten, können dadurch entfallen.

Die Erfindung ist neben Wasser auch für andere Sorbate anwendbar.

Bevorzugte Adsorptionsmittel zeigen eine hohe Selektivität, um polare Dampfmoleküle aus Gasen zu adsorbieren. Die Fähigkeit, Wasserdampf von feuchter Luft zu adsorbieren, weisen folgende Materialien auf: modifizierter Kohlenstoff (Aktivkohle), Kieselgele, aktiviertes Aluminiumoxid, aktiviert Bauxit, Molekularsiebe und metallorganische Gerüstmaterialien (MOFs), in Oxiden, z.B. Siliziumoxid fixierte Lithiumsalze.

Vorteilhaft werden metallorganische Gerüstmaterialien verwendet, die wasseradsorbierende Eigenschaften aufweisen, und/oder modifizierter Kohlenstoff (Aktivkohle).

MOFs sind den klassischen Adsorbermaterialien wie Kieselgele oder Zeolithen in mehreren Eigenschaften überlegen: (i) Sättigungskapazität: Zeolithe benötigen 10 kg Adsorptionsmaterial pro Liter Wasser während MOFs 1 bis 2 kg Adsorptionsmaterial pro Liter Wasser benötigen, (ii) Regenerationstemperatur: Zeolithe benötigen 140 bis 170°C während MOFs 70 bis 80°C benötigen, (iii) Adsorptionsenthalpie: MOFs setzen durchschnittlich 20-30 % weniger Adsorptionswärme frei.

Ein für die vorliegende Erfindung wichtiger Vorteil ist das thermodynamische Trocknungsgleichgewicht "Wasser (gasförmig) zu im Adsorptionsmittel gebundenes Wasser": Bei den MOFs liegt dieses Gleichgewicht im Vergleich zu den Zeolithen weniger weit auf der Seite des gebundenen Wassers. So kann bei dem Einsatz von MOFs eine Übertrocknung vermieden werden. Ferner kann dadurch eine Rückbefeuchtung mit den genannten Problemen komplett vermieden werden. Ferner kann bei dem Einsatz von modifiziertem Kohlenstoff (Aktivkohle) ebenso eine Überhitzung vermieden werden.

Vorteilhaft können als wasseradsorbierende MOFs die MOFs aus der folgenden Gruppe einzeln oder als Mischung eingesetzt werden: HKUST-1, MOF-804, Basolite A120, BASOLITE^{®} A520, MIL-160, MOF-841, UIO-66, DUT-67 und/oder MOF-801.

Vorteilhaft weisen die wasseradsorbierende MOFs ferner eine Zyklusstabilität von > 100.000 auf, wobei ein Zyklus aus den Modi Adsorption und Regeneration besteht.

Vorteilhaft können als wasseradsorbierende und zyklusstabile MOFs die MOFs aus der folgenden Gruppe einzeln oder als Mischung eingesetzt werden: BASOLITE^{®} A520, MIL-160, MOF-841, UIO-66, DUT-67 und/oder MOF-801.

Insbesondere sind Aluminium-Fumarat-MOF, das im Handel als BASOLITE^{®} A520 erhältlich ist und MIL160 als Adsorptionsmaterial geeignet.

MOFs lassen sich aus kostengünstigen Reagenzien leicht herstellen und haben eine ausreichende Wasserstabilität. MOFs sind im Stand der Technik bekannt und beispielsweise in der US 5,648,508, EP-A-0 790 253, M. O'Keeffe et al., J. Sol. State Chem., 152 (2000), Seite 3 bis 20, H. Li et al., Nature 402, (1999), Seite 276, M. Eddaoudi et al., Topics in Catalysis 9, (1999), Seite 105 bis 111, B. Chen et al., Science 291, (2001), Seite 1021 bis 1023, DE-A-101 11 230, DE-A 10 2005 053430, WO-A 2007/054581, WO-A 2005/049892 und WO-A 2007/023134 beschrieben.

Das Adsorptionsmaterial, insbesondere die MOFs, kann als pulverförmiges Material, Granulate, Formkörper oder Monolithen bereitgestellt werden und kann beispielsweise in einem Gehäuse als Matrix, als Beschichtung oder als eine Füllung wie einem Füllbett oder einem bewegten Bett angeordnet sein.

In einer bevorzugten Ausführungsform der vorliegenden Erfindung wird das Sorptionsmaterial als Beschichtung auf einem Substrat, vorteilhaft den Wänden und/oder Einbauten der Sorptionskanäle des adsorptiven Wärmetauschers, abgeschieden. Das Sorptionsmaterial kann mit oder ohne Bindemittel beschichtet werden. Das Substrat besteht vorzugsweise aus Metall.

Ferner betrifft die vorliegende Erfindung eine Klimatisierungsvorrichtung, gemäß Anspruch 7, zum Konditionieren eines Fluids, bevorzugt zum Kühlen und/oder Trocknen von Luft, mit
- einem ersten absorptiven Wärmetauscher, bevorzugt Kreuzstromwärmetauscher, der in mindestens einer Strömungsrichtung Sorptionskanäle aufweist und in mindestens einer Strömungsrichtung Wärmetauscherkanäle aufweist
- einer stromabwärts des ersten absorptiven Wärmetauschers in Strömungsrichtung der Sorptionskanäle und einer stromabwärts des ersten absorptiven Wärmetauschers in Strömungsrichtung der Wärmetauscherkanäle angeordneten Wärme-Kälte-Quelle zur Abführung von Wärme und zur Aufnahme von Wärme und
- einem stromabwärts der Wärme-Kälte-Quelle zur Aufnahme von Wärme angeordneten zweiten absorptiven Wärmetauscher, bevorzugt Kreuzstromwärmetauscher, der in mindestens einer Strömungsrichtung Sorptionskanäle aufweist und in mindestens einer Strömungsrichtung Wärmetauscherkanäle aufweist, wobei die Sorptionskanäle des zweiten Wärmetauschers in Strömungsrichtung der Wärmetauscherkanäle des ersten Wärmetauschers angeordnet sind.

Als Adsorptionsmaterial werden vorteilhaft MOFs eingesetzt, siehe vorangestellte Beschreibung und Bevorzugungen.

Den absorptiven Wärmetauschern sind vorteilhaft Filter- und Reinigungsvorrichtungen vorgelagert. Den absorptiven Wärmetauschern sind vorteilhaft Vorrichtung zur Schalldämpfung des Prozessfluids vorgelagert.

Bevorzugt ist der Wärmetauscher ein absorptiver Luft-Luft-Kreuzstromwärmetauscher, der dadurch gekennzeichnet ist, dass der Wärmetauscher in mindestens einer Strömungsrichtung Sorptionskänale aufweist, die als Adsorptionsmaterial wasserabsorbierende metallorganische Gerüstmaterialien aufweisen, und in mindestens einer anderen Strömungsrichtung Wärmetauscherkanäle aufweist, wobei die Wärmetauscherkanäle weniger als 5% Adsorptionsmaterial in Bezug auf die Beladung der Sorptionskanäle mit Adsorptionsmaterial beinhalten.

Vorteilhaft weisen die Wärmetauscherkanäle kein Adsorptionsmaterial auf.

Der Luft-Luft-Kreuzstromwärmetauscher ist vorteilhaft dergestalt ausgebildet, dass eine Mehrzahl parallel geschalteter Sorptionskanäle und eine Mehrzahl parallel geschalter Wärmetauscherkanäle angeordnet sind. Mit dem Begriff der Parallelschaltung ist dabei gemeint, dass diese Strömungskanäle jeweils über einen gemeinsamen Zulauf und einen gemeinsamen Ablauf verfügen. Vorzugsweise sind die Sorptionskanäle und die Wärmetauscherkanäle des Sorberwärmetauschers alternierend angeordnet. Durch eine derartige alternierende Anordnung ist eine optimierte Wärmeübertragung innerhalb des Wärmetauschers möglich. Gleichzeitig ist eine Durchmischung der Fluidströme zu vermeiden.

Die Kanalweite beträgt vorteilhaft 0,5 bis 2 mm, insbesondere 0,7 bis 1,5 mm. Die Kanalweite der Sorptionskanäle und der Wärmetauscherkanäle kann unterschiedlich sein. Vorteilhaft ist der Strömungswiderstand der Sorptionskanäle und der Wärmetauscherkanäle gleich groß. Vorteilhaft sind somit die Sorptionskanäle um die doppelte Beschichtungsdicke des Adsorptionsmaterials weiter als die Wärmetauscherkanäle.

Die Beschichtungsdicke des Adsorptionsmaterials beträgt vorteilhaft 10 bis 200 µm, bevorzugt 20 bis 150 µm, insbesondere 25 bis 100 µm.

Der Luft-Luft-Kreuzstromwärmetauscher wird vorteilhaft für die Konditionierung von Frischluft eingesetzt, vorteilhaft bei Gebäuden oder Fahrzeugen.

Das Verfahren zur Konditionierung von Fluiden und die entsprechende Klimatisierungsvorrichtung sind vorteilhaft zur Konditionierung von Luft für die Klimatisierung von Gebäuden oder von Fahrzeugen, insbesondere Zügen und Elektroautos, eingesetzt. Besonders vorteilhaft wird dieses Verfahren und diese Vorrichtung für die Klimatisierung von Krankenhäusern, Laboren und anderen Einrichtungen, eingesetzt, bei denen eine 100 prozentige Zufuhr von Frischluft vorgeschrieben ist.

Ferner betrifft die vorliegende Erfindung ein Fassadenelement mit einer eingebauten Klimatisierungsvorrichtung gemäß der vorliegenden Erfindung. Die Kompaktheit der erfindungsgemäßen Klimatisierungsvorrichtung ermöglicht den Einbau in ein Fassadenelement und somit die Möglichkeit für eine dezentrale, flexible Klimatisierung. Ferner ermöglicht diese Dezentralisierung eine individuelle, quasipersonalisierte Steuerung der Klimatisierung, z.B. der Temperaturwahl pro Fassadenelement. Diese individuelle Steuerung könnte beispielsweise via App-Anwendungen vorgenommen werden.

Der Vorteil der vorliegenden Erfindung liegt in der Synergie folgender Merkmale (i) Verwendung eines effektiven Adsorptionsmaterial, insbesondere ein Adsorptionsmaterial mit hoher Beladungskapazität und geringen Recyclierungstemperaturen, (ii) Verwendung eines Regenerationsfluid, dass eine möglichst große Temperaturdifferenz und Feuchtigkeitsdifferenz zum gewählten (regenerierten) Adsorptionsmaterial aufweist und (iii) die Nutzung der Adsorptionswärme für die Regeneration.

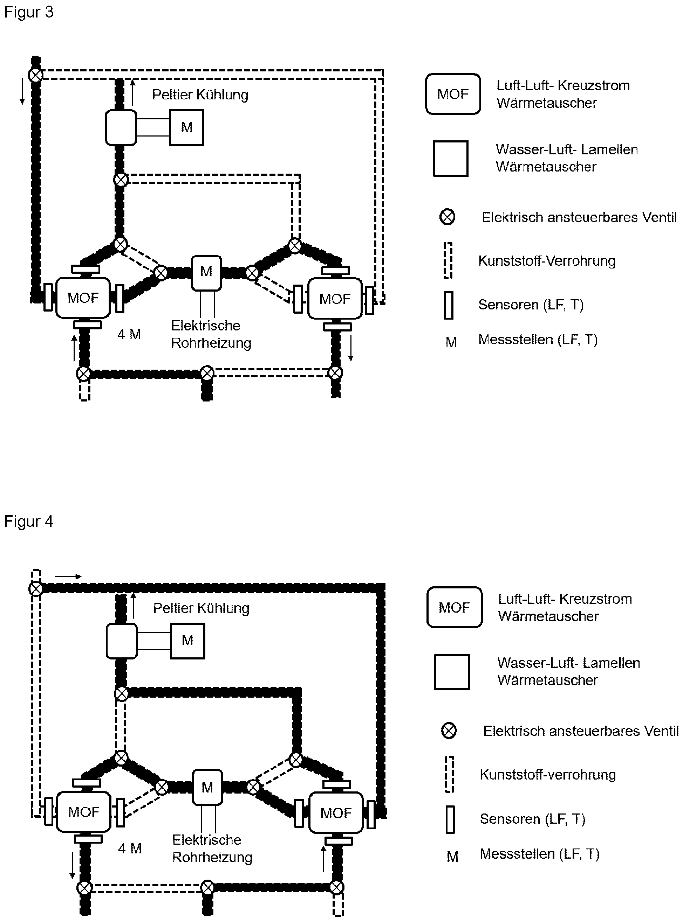

Durch die vorliegende Erfindung konnte das Problem der Übertrocknung und der damit verbundenen Rückbefeuchtung vermieden werden. Es fällt an keiner Stelle kondensiertes Wasser an. Ferner können somit die beiden Fluidströme, Außenluft und Innenabluft, durch die ganze Klimatisierungsvorrichtung getrennt gehalten werden. Durch die Vermeidung einer Kompressoreinheit ist die vorliegende Klimatisierungsvorrichtung wartungsarm. Durch den Einsatz eines Adsorptionsmaterials mit hoher Kapazität können kompakte Klimatisierungsvorrichtung gebaut werden, die vorteilhaft dezentral in ein Gebäude integriert werden. Die kompakte Klimatisierungsvorrichtung bietet die Möglichkeit, diese Einheit in einem Fassadenelement zu integrieren und dezentral zu steuern. Ferner konnte durch den Einsatz eines Adsorptionsmaterials mit hoher Kapazität und geringer Regenerationstemperatur die Regenerierung vereinfacht werden. Die Regenerierung der vorliegenden Erfindung kann aufgrund des reduzierten Regenerierungsbedarfs von Außenluft auf Innenabluft umgestellt werden. Diese Verwendung der Innenablauft als Regenerationsfluid bietet die Möglichkeit einer vereinfachten Steuerung, da sich die Schwankungen der Temperatur und Feuchtigkeit der Innenabluft - anders als der Außenabluft - in einem engen Bereich bewegen.
Figur 1: Abstrahierter Aufbau der Klimatisierungsvorrichtung
   In der Figur 1 werden folgende Abkürzungen verwendet:
   OL Außenluft
   KL Konditionierte Luft
   IL Innenluft
   AL Abluft
   10 Absorber-Wärmetauscher 1
   11 Absorber-Wärmetauscher 2
   20 Wärmepumpe
   21 Wärme-Quelle oder Warmpol der Wärmepumpe
   22 Kälte-Quelle oder Kaltpol der Wärmepumpe
   23 Antriebenergie der Wärmepumpe
Figur 2: Aufbau des Luft-Luft-Kreuzstromwärmetauscher

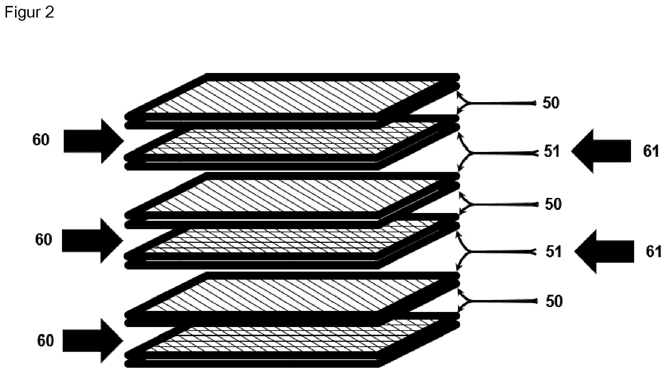

   In der Figur 2 werden folgende Abkürzungen verwendet:
   50 Mit Absorber beschichtete Wärmetauscherfläche
   51 Unbeschichtete Wärmetauscherfläche
   60 Fluss des zu trocknenden oder regenerierenden Fluids, vorteilhaft Luft
   61 Fluss des kühlenden Regenerationsfluids, vorteilhaft Abluft
Figur 3: Erster Schaltzustand der erfindungsgemäßen Klimatisierungsvorrichtung
   Im unteren Teil der Figur 3 strömt die gegebenenfalls filtrierte Außenluft in die Vorrichtung und wird über den linken Ast in die Sorptionskanäle des ersten beschichteten Wärmetauschers geleitet. Die getrocknete Luft verlässt den Wärmetauscher nach oben in Richtung Kühlelement, hier beispielhaft durch eine Peltierkühlung bezeichnet. Links oben in der Figur strömt Luft aus dem Innenraum in die Wärmetauscherkanäle des ersten, aktiven Wärmetauschers und verlässt ihn, aufgeheizt durch die Adsorptionswärme, nach rechts in Richtung der Zusatzheizung, hier beispielhaft als elektrische Rohrheizung ausgelegt. Die erhitzte Luft strömt von oben in die Sorptionskanäle des zweiten, zu regenerierenden Wärmetauschers und verlässt die Vorrichtung mit Wasserdampf aus dem Regenerationsprozess.
Figur 4: Zweiter Schaltzustand der erfindungsgemäßen Klimatisierungsvorrichtung
   Im unteren Teil der Figur 4 strömt die gegebenenfalls filtrierte Außenluft in die Vorrichtung und wird über den rechten Ast in die Sorptionskanäle des vorher regenerierten beschichteten Wärmetauschers geleitet. Die getrocknete Luft verlässt den Wärmetauscher nach oben in Richtung Kühlelement, hier beispielhaft durch eine Peltierkühlung bezeichnet. Links oben in der Figur strömt Luft aus dem Innenraum in die Wärmetauscherkanäle des aktiven Wärmetauschers und verlässt ihn, aufgeheizt durch die Adsorptionswärme nach links in Richtung der Zusatzheizung, hier beispielhaft als elektrische Rohrheizung ausgelegt. Die erhitzte Luft strömt von oben in die Sorptionskanäle des zweiten, zu regenerierenden Wärmetauschers und verlässt die Vorrichtung mit Wasserdampf aus dem Regenerationsprozess.

### Beispiel 1:

Aluminiumfumarat wurde hergestellt entsprechend EP2 230 288.

Eine Dispersion aus 1300 g Aluminiumfumarat und 3300 g destilliertem Wasser wurde durch Rühren bei 570 u/min mit einem Zahnscheibenrührer (7cm Scheibendurchmesser; Heidolph RZR2010control) für 15 Minuten hergestellt. Nach Zugabe von 810 g Polyacryatdispersion (Acronal^{®} Edge, 40% Feststoffanteil) wurde die Rührergeschwindigkeit für 15 min auf 740 U/min erhöht. Fünf so hergestellte Ansätze wurden mit einem Propellerrührer (Durchmesser 10 cm, IKA EURO ST 40DS0000) gemischt und für 12 Stunden homogenisiert. Anschließend wurde Schaum entfernt und die Dispersion durch langsames Rühren entgast.

Die Dispersion hatte eine Viskosität von 4 Pa s bei 10 Hz (gemessen mit Anton Paar, MCR102, PP50, 400 µm Spalt, 25°C).

Die Dispersion wurde zweimal durch eines der beiden Kanalsysteme eines Gegenstrom-Wärmeüberträgers aus Aluminium (Länge 397 mm; Höhe 172 mm; Breite 200 mm; Kanalbreite unbeschichtet ca. 1 mm; Klingenburg GS18-200) gefüllt und die Kanäle mit Luft freigeblasen. Nach Trocknen des Wärmetauschers ergab sich eine Gewichtszunahme von 346g, was einer mittleren Schichtdicke von 96µm entsprach.

### Beispiel 2:

Ein wie in Beispiel 1 beschichteter Wärmetauscher wurde so angeschlossen, dass durch das beschichtete Kanalbündel (1) Luft mit 27°C und 90% relativer Luftfeuchtigkeit geleitet wurde (OL), durch das andere Kanalbündel Luft mit 20°C und 80% relativer Luftfeuchtigkeit (IL). Die Flussgeschwindigkeit betrugt 50 m³/h. Innerhalb der ersten 5 Minuten des Betriebs des Adsorbers stellten sich auf der Ausflussseite des beschichteten Kanalbündels (KL) Temperaturen zwischen 28°C und 32°C und einer relativen Luftfeuchtigkeit zwischen 35% und 50% ein. Die Enthalpie der Luft wurde nahezu isotherm von 80 kJ/kg auf 63 kJ/kg erniedrigt.

Der Ausfluss des nicht beschichteten Kanalbündels (AL) zeigte eine Temperaturzunahme auf 30°C. Die Enthalpie dieses Luftstroms stieg von ca. 51 kJ/m³ auf ca. 63 kJ/m³.

Der Wärmetauscher erwärmte sich um 10°. Es wurden innerhalb der ersten 5 Minuten 60 kJ/m³ von dem Außenluftstrom (OL→ KL) auf den Innenluftstrom (IL → AL) übertragen, was ca. 50% der Adsorptionsenthalpie von Wasser an Aluminiumfumarat entspricht.

### Beispiel 3:

Der Wärmeüberträger aus Beispiel 2 wurde für 5 Minuten mit heißer, trockener Luft (90°C, 3% rel. Luftfeuchtigkeit) gespült. Danach wurde das Experiment aus Beispiel 2 wiederholt. Auf der Ausflussseite des beschichteten Kanalbündels wurden innerhalb der ersten 5 Minuten Temperaturen zwischen 27°C und 33°C sowie zwischen 40 und 50% relativer Luftfeuchtigkeit gemessen.

### Beispiel 4:

Vergleich mit Kubota et al.

| | Erfindungsgemäß | Kubota et al |
|---|---|---|
| Wärmetauscher | Luft-Luft- Plattenwärmetauscher ca. 20cm x 20cm x 40 cm, ohne innere Finnen, innere Oberfläche ca. 1 m² | Luft-Luft- Plattenwärmetauscher ca. 20cm x 20cm x 20 cm, mit inneren Finnen; innere Oberfläche ca.12 m² |
| Beschichtung | Aluminiumfumarat, ca. 150 g/m² | Aluminophosphat, ca. 30 g/m² |
| Gesamtmenge Absorber | 150 g | 360 g |
| Strömungsgeschwindigkeit | 60 m³/h | 1 m/s, 72 m³/h |
| Adsorptionszeit bis zum halben Abfall (time to half maximum), Maß für die Zykluszeit | 300 s | 300 s |

### Adsorptionszeit bis zum halben Abfall:

Wenn Außenluft (ODA) durch einen frisch regenerierten Wärmetauscher fließt, wird sie sehr schnell getrocknet. Die dabei auftretende Adsorptionsenthalpie sorgt für einen Temperaturanstieg. Durch die zunehmende Belegung des Absorbers mit Wasser, kommt es zur Abschwächung von Feuchtigkeitsaufnahme und Adsorptionsenthalpie. Die austretende Luft (SUP) nähert sich daher mit zunehmender Zeit in Luftfeuchtigkeit und Temperatur der Außenluft an. Der Betrieb muss dann auf den anderen Zyklus umgeschaltet werden. Als charakteristisches Maß für die Zykluszeit eines Aufbaus mit zwei im Wechsel betriebenen beschichteten Wärmetauschern wird die Zeit gewählt, vom Beginn der Adsorption bis zu dem Zeitpunkt, wenn die Temperatur oder Luftfeuchtigkeit sich auf die Hälfte des Maximums den Außenluftbedingungen angeglichen hat. Unter diesen Bedingungen kann man davon ausgehen, dass die schnell verfügbare Adsorbermenge belegt ist und die Verteilung der Adsorptionsenthalpie zu einem großen Teil abgeschlossen ist.

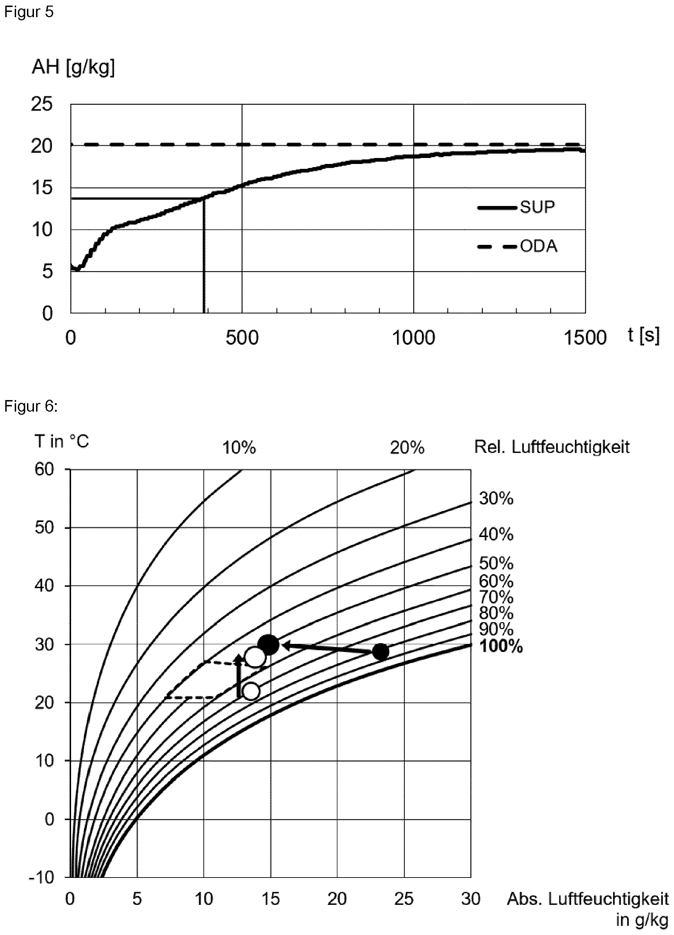

### Erklärung zur Auswertung der Messkurven: Figur 5

Auswertung der Messkurve für 60m³/h. Die Luftfeuchtigkeit der Außenluft (ODA) beträgt 20 g/kg, die der Zuluft (SUP) variiert mit der Sättigung des Adsorbers. Bei einem regenerierten Adsorber beträgt die Luftfeuchtigkeit 5g/kg, bei langen Zeiten nähert sie sich der Aussenluft an. Die Kurve kann charakterisiert werden mit der Halbwertszeit, hier durch die Linien bei 13 g/kg und ca. 350 s gezeigt.

Figur 6: Adsorptions und Desorptionskurve von Aluminium-Fumarat MOF. Das Diagramm zeigt den Gleichgewichtszustand der Beladung von MOF mit Wasser als Funktion der relativen Luftfeuchtigkeit. Im Gegensatz zu typischen analogen Messungen an Zeolithen, zeichnen sich die MOFs durch einen zweigeteilten Verlauf aus: Unterhalb von 20% relativer Luftfeuchtigkeit nimmt das MOF keinen Wasserdampf auf, d.h. es übertrocknet die Luft nicht. Zwischen 20 und 40% relativer Luftfeuchtigkeit nimmt das MOF bis zu 30% seines Eigengewichts an Luftfeuchtigkeit auf. Bei noch höheren relativen Luftfeuchtigkeiten kommt es zu einer weiteren kontinuierlichen Wasseraufnahme.

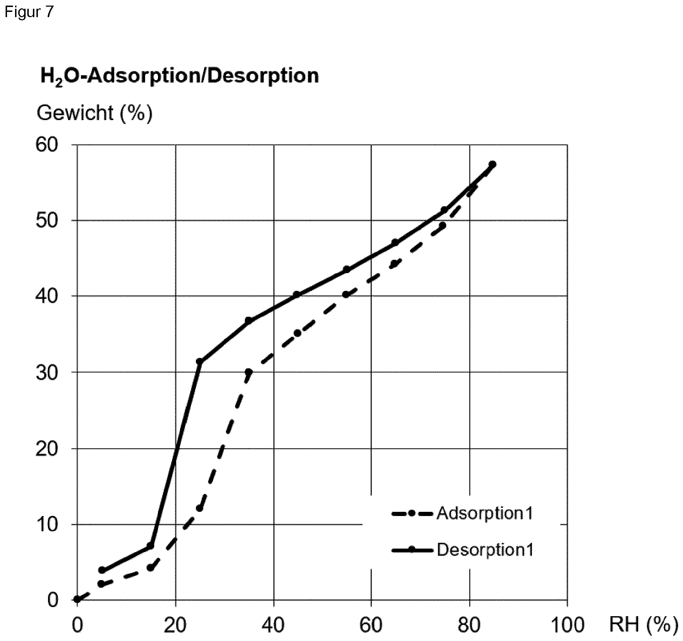

### Erklärung zum Mollierdiagramm, Figur 7:

Das Diagramm zeigt die möglichen Kombinationen aus absoluter Luftfeuchtigkeit und Temperatur. In dieser Darstellung ist der Einfluss der Luftfeuchtigkeit auf die Dichte der Luft weggelassen (dieser Effekt würde die Isothermen (Zustände gleicher Temperatur) leicht von links nach rechts ansteigen lassen.)

Die Aufnahmefähigkeit von Luft für Wasserdampf steigt mit zunehmender Temperatur. Die Sättigungskurve, wird mit 100% relative Luftfeuchtigkeit angegeben. Unterhalb dieser Temperatur kondensiert Luftfeuchtigkeit als Nebel aus. Daher wird sie auch als "Nebelkurve" bezeichnet. Der Komfortbereich für Büroräume wird zwischen 40%relativer Luftfeuchtigkeit / 20°C und 60% relativer Luftfeuchtigkeit /26°C.

Ein typisches Aussenklima in einem feuchtwarmen Klima ist z.B. der Punkt mit 30°C und 80% relativer Luftfeuchtigkeit (ca. 23g/kg Wasserdampf). Um in den Bereich des Innenraum-Komforts zu gelangen, muss die Luft vor allem getrocknet werden. Dies geschieht in der etablierten Klimatechnologie durch Kühlen auf ca. 10°C, so dass die Luftfeuchtigkeit auskondensiert, bis die absolute Luftfeuchtigkeit ca. 10-12 g/kg beträgt (Nebelkurve).

Durch den beschichteten Wärmetauscher kann die Luft nahezu isotherm getrocknet werden, ohne zu kühlen.

Eine Trocknung ohne Wärmetauscher würde zu einem Temperaturanstieg der Luft führen durch die Freisetzung der Kondensations- und Adsorptionsenthalpie des Wassers.

## Patentansprüche

1. Verfahren zum Konditionieren eines Fluids umfassend folgende Schritte:
(a) Strömen des Prozessfluids durch die Sorptionskanäle eines ersten absorptiven Wärmetauschers (10),
(b) Trocknen des Prozessfluids im ersten absorptiven Wärmetauscher (10),
(c) Strömen des getrockneten Prozessfluids zu der kalten Seite einer Kälte-Quelle (22),
(d) Kühlen des getrockneten Prozessfluids in einer Kälte-Quelle (22),
(e) Strömen des getrockneten und gekühlten Prozessfluids in den zu konditionierenden Bereich,
(f) Paralleles Strömen des Regenerationsfluids durch die Wärmetauscherkanäle des ersten absorptiven Wärmetauschers (10),
(g) Aufnahme der Adsorptionswärme durch das Regenerationsfluid,
(h) Strömen des erwärmten Regenerationsfluids zu der warmen Seite einer Wärme-Quelle (21),
(i) Weiteres Erwärmen des Regenerationsfluids in der Wärme-Quelle (21),
(j) Strömen des erhitzten Regenerationsfluids durch die Sorptionskanäle eines zweiten absorptiven Wärmetauschers (11),
(k) Verdampfen des im zweiten absorptiven Wärmetauscher (11) eingelagerten Adsorbate und Aufnahmes dieser Adsorbate durch das Regenerationsfluid,
(l) Strömen des feuchten Regenerationsfluids in einen Außenbereich,
(m) Unterbrechen des Strömens des Prozessfluids und des Regenerationsfluids in den ersten adsorptiven Wärmetauscher (10),
(n) Strömen des Prozessfluids durch die Sorptionskanäle eines zweiten absorptiven Wärmetauschers (11),
(o) Trocknen des Prozessfluids im zweiten absorptiven Wärmetauscher (11),
(p) Strömen des getrockneten Prozessfluids zu der kalten Seite einer Kälte-Quelle (22),
(q) Kühlen des getrockneten Prozessfluids in einer Kälte-Quelle (22),
(r) Strömen des getrockneten und gekühlten Prozessfliuds in den zu konditionierenden Bereich,
(s) Paralleles Strömen des Regenerationsfluids durch die Wärmetauscherkanäle des zweiten absorptiven Wärmetauschers (11),
(t) Aufnahme der Adsorptionswärme durch das Regenerationsfluid,
(u) Strömen des erwärmten Regenerationsfluids zu der warmen Seite einer Wärme-Quelle (21),
(v) Weiteres Erwärmen des Regenerationsfluids in der Wärme-Quelle (21),
(w) Strömen des erhitzten Regenerationsfluids durch die Sorptionskanäle eines ersten absorptiven Wärmetauschers (10),
(x) Verdampfen des im ersten absorptiven Wärmetauscher (10) eingelagerten Adsorbate und Aufnahmes dieser Adsorbate durch das Regenerationsfluid,
(y) Strömen des feuchten Regenerationsfluids in einen Außenbereich.

2. Verfahren nach Anspruch 1, wobei als Regenationsfluid Abluft aus dem zu konditionierenden Bereich eingesetzt wird.

3. Verfahren nach Anspruch 1 oder 2, wobei nach Schritt (l), Strömen des feuchten Regenerationsfluids in eine Außenbereich und vor Schritt (m), Unterbrechen des Strömens des Prozessfluids und des Regenrationsfluids in den ersten absorptiven Wärmetauscher ein Kühlen des zweiten absorptiven Wärmetauschers erfolgt.

4. Verfahren nach Anspruch 3, wobei das Kühlen des zweiten absorptiven Wärmetauschers (11) mit Hilfe eines Durchströmens des Wärmetauschers mit dem Regenerationsfluids für den zweiten Wärmetauscher (11), dem konditionierten Prozessfluids und/oder der Außenluft erreicht wird.

5. Verfahren nach mindestens einem der Ansprüche 1 bis 4, wobei das Verfahren zyklisch betrieben wird.

6. Verfahren nach mindestens einem der Ansprüche 1 bis 5, wobei als Wärme- bzw. Kälte-Quelle Wärmepumpen auf Basis von Kompressoranlagen (20) eingesetzt werden.

7. Klimatisierungsvorrichtung zum Konditionieren eines Fluids mit
- einem ersten absorptiven Wärmetauscher (10), der in mindestens einer Strömungsrichtung Sorptionskanäle aufweist und in mindestens einer Strömungsrichtung Wärmetauscherkanäle aufweist
- einer stromabwärts des ersten absorptiven Wärmetauschers (10) in Strömungsrichtung der Sorptionskanäle und stromabwärts des ersten absorptiven Wärmetauschers (10) in Strömungsrichtung der Wärmetauscherkanäle angeordnete Wärme-Kälte-Quelle (21, 22) zur Abführung von Wärme und zur Aufnahme von Wärme und
- einem stromabwärts der Wärme-Kälte-Quelle (21, 22) zur Aufnahme von Wärme angeordneten zweiten absorptiven Wärmetauscher (11), der in mindestens einer Strömungsrichtung Sorptionskanäle aufweist und in mindestens einer Strömungsrichtung Wärmetauscherkanäle aufweist, wobei die Sorptionskanäle des zweiten Wärmetauschers (11) stromabwärts und in Strömungsrichtung der Wärmetauscherkanäle des ersten Wärmetauschers (10) angeordnet sind.

8. Klimatisierungsvorrichtung nach Anspruch 7, **dadurch gekennzeichnet, dass** die Wärmetauscher (10, 11) und die Wärme-Kälte-Quellen (21, 22) über feste Rohrleitungen und/oder bewegliche Schläuche verbunden sind.

9. Klimatisierungsvorrichtung nach Anspruch 7 oder 8, wobei die Vorrichtung keine rotierenden Bauteile enthält.

10. Klimatisierungsvorrichtung nach mindestens einem der Ansprüche 7 bis 9, wobei vor den Wärmetauschern Elemente eingefügt sind, die die Luftströmung auffächern und/oder laminarisieren.

11. Klimatisierungsvorrichtung nach mindestens einem der Ansprüche 7 bis 10, wobei das Adsorptionsmaterial eine Dichte von 0,2 bis 2 g/cm³ aufweist und als Adsorptionsmaterial in den Sorptionskanälen metallorganische Gerüstmaterialien und/oder modifizierter Kohlenstoff eingesetzt werden.

12. Klimatisierungsvorrichtung nach Anspruch 7, wobei als Adsorptionsmaterial in den Sorptionskanälen metallorganische Gerüstmaterialien (MOFs) aus der folgenden Gruppe A520, MIL-160, MOF-841, UIO-66, DUT-67 und/oder MOF-801 eingesetzt werden.

13. Klimatisierungsvorrichtung nach mindestens einem der Ansprüche 7 bis 12, wobei Kreuzstromwärmetauscher eingesetzt werden.

14. Verwendung der Klimatisierungsvorrichtung nach mindestens einem der Ansprüche 7 bis 12 zur Konditionierung von Fluiden in Gebäuden und Fahrzeugen sowie in Krankenhäusern und/oder Laboren.

15. Fassadenelement beinhaltend eine Klimatisierungsvorrichtung nach mindestens einem der Ansprüche 7 bis 13.

## Claims

1. A process for conditioning a fluid, which comprises the following steps:
(a) flow of the process fluid through the sorption channels of a first absorptive heat exchanger (10),
(b) drying of the process fluid in the first absorptive heat exchanger (10),
(c) flow of the dried process fluid to the cold side of a cold source (22),
(d) cooling of the dried process fluid in a cold source (22),
(e) flow of the dried and cooled process fluid into the region to be conditioned,
(f) parallel flow of the regeneration fluid through the heat exchanger channels of the first absorptive heat exchanger (10),
(g) uptake of the heat of adsorption by the regeneration fluid,
(h) flow of the heated regeneration fluid to the hot side of a heat source (21),
(i) further heating of the regeneration fluid in the heat source (21),
(j) flow of the heated regeneration fluid through the sorption channels of a second absorptive heat exchanger (11),
(k) vaporization of the adsorbates located in the second absorptive heat exchanger (11) and uptake of these adsorbates by the regeneration fluid,
(l) flow of the moist regeneration fluid into an exterior region,
(m) interruption of the flow of the process fluid and of the regeneration fluid into the first adsorptive heat exchanger (10),
(n) flow of the process fluid through the sorption channels of a second absorptive heat exchanger (11),
(o) drying of the process fluid in the second absorptive heat exchanger (11),
(p) flow of the dried process fluid to the cold side of a cold source (22),
(q) cooling of the dried process fluid in a cold source (22),
(r) flow of the dried and cooled process fluid into the region to be conditioned,
(s) parallel flow of the regeneration fluid through the heat exchanger channels of the second absorptive heat exchanger (11),
(t) uptake of the heat of adsorption by the regeneration fluid,
(u) flow of the heated regeneration fluid to the hot side of a heat source (21),
(v) further heating of the regeneration fluid in the heat source (21),
(w) flow of the heated regeneration fluid through the sorption channels of a first absorptive heat exchanger (10),
(x) vaporization of the adsorbates located in the first absorptive heat exchanger (10) and uptake of these adsorbates by the regeneration fluid,
(y) flow of the moist regeneration fluid into an exterior region.

2. The process according to claim 1, wherein exhaust air from the region to be conditioned is used as regeneration fluid.

3. The process according to claim 1 or 2, wherein, after step (1), flow of the moist regeneration fluid into an exterior region, and before step (m), interruption of the flow of the process fluid and of the regeneration fluid into the first absorptive heat exchanger, the second absorptive heat exchanger is cooled.

4. The process according to claim 3, wherein the cooling of the second absorptive heat exchanger (11) is achieved by means of the regeneration fluid for the second heat exchanger (11), the conditioned process fluid and/or the exterior air flowing through the heat exchanger.

5. The process according to at least one of claims 1 to 4, wherein the process is operated cyclically.

6. The process according to at least one of claims 1 to 5, wherein heat pumps based on compressor plants (20) are used as heat source or cold source.

7. An air conditioning apparatus for conditioning a fluid, comprising
- a first absorptive heat exchanger (10), which has sorption channels in at least one flow direction and has heat exchanger channels in at least one flow direction,
- a heat-cold source (21, 22) for the removal of heat and for the uptake of heat arranged downstream of the first absorptive heat exchanger (10) in the flow direction of the sorption channels and arranged downstream of the first absorptive heat exchanger (10) in the flow direction of the heat exchanger channels and
- a second absorptive heat exchanger (11), which is arranged downstream of the heat-cold source (21, 22) for the uptake of heat and has sorption channels in at least one flow direction and has heat exchanger channels in at least one flow direction, where the sorption channels of the second heat exchanger (11) are arranged downstream and in the flow direction of the heat exchanger channels of the first heat exchanger (10).

8. The air conditioning apparatus according to claim 7, wherein the heat exchangers (10, 11) and the heat-cold sources (21, 22) are connected via rigid pipes and/or movable hoses.

9. The air conditioning apparatus according to claim 7 or 8, wherein the apparatus does not comprise any rotating components.

10. The air conditioning apparatus according to at least one of claims 7 to 9, wherein elements which fan out and/or laminarize the airflow are inserted upstream of the heat exchangers.

11. The air conditioning apparatus according to at least one of claims 7 to 10, wherein the adsorption material has a density of from 0.2 to 2 g/cm³ and metal-organic frameworks and/or modified carbon are used as adsorption material in the sorption channels.

12. The air conditioning apparatus according to claim 7, wherein metal-organic frameworks (MOFs) from the following group of A520, MIL-160, MOF-841, UIO-66, DUT-67 and/or MOF-801 are used as adsorption material in the sorption channels.

13. The air conditioning apparatus according to at least one of claims 7 to 12, wherein cross-flow heat exchangers are used.

14. The use of the air conditioning apparatus according to at least one of claims 7 to 12 for conditioning fluids in buildings and vehicles and in hospitals and/or laboratories.

15. An outer wall element comprising an air conditioning apparatus according to at least one of claims 7 to 13.

## Revendications

1. Procédé de conditionnement d'un fluide, comprenant les étapes suivantes :
(a) écoulement du fluide de procédé à travers les canaux de sorption d'un premier échangeur de chaleur fonctionnant par absorption (10),
(b) séchage du fluide de procédé dans le premier échangeur de chaleur fonctionnant par absorption (10),
(c) écoulement du fluide de procédé séché vers le côté froid d'une source de froid (22),
(d) refroidissement du fluide de procédé séché dans une source de froid (22),
(e) écoulement du fluide de procédé séché et refroidi dans la zone à conditionner,
(f) écoulement parallèle du fluide de régénération à travers les canaux d'échangeur de chaleur du premier échangeur de chaleur fonctionnant par absorption (10),
(g) inclusion de la chaleur d'adsorption par le fluide de régénération,
(h) écoulement du fluide de régénération réchauffé vers le côté chaud d'une source de chaleur (21),
(i) nouveau réchauffage du fluide de régénération dans la source de chaleur (21),
(j) écoulement du fluide de régénération chauffé à travers les canaux de sorption d'un deuxième échangeur de chaleur fonctionnant par absorption (11),
(k) évaporation de l'adsorbat incorporé dans le deuxième échangeur de chaleur fonctionnant par absorption (11) et inclusion de cet adsorbat par le fluide de régénération,
(l) écoulement du fluide de régénération humide dans une zone externe,
(m) interruption de l'écoulement du fluide de procédé et du fluide de régénération dans le premier échangeur de chaleur fonctionnant par absorption (10),
(n) écoulement du fluide de procédé à travers les canaux de sorption d'un deuxième échangeur de chaleur fonctionnant par absorption (11),
(o) séchage du fluide de procédé dans le deuxième échangeur de chaleur fonctionnant par absorption (11),
(p) écoulement du fluide de procédé séché vers le côté froid d'une source de froid (22),
(q) refroidissement du fluide de procédé séché dans une source de froid (22),
(r) écoulement du fluide de procédé séché et refroidi dans la zone à conditionner,
(s) écoulement parallèle du fluide de régénération à travers les canaux d'échangeur de chaleur du deuxième échangeur de chaleur fonctionnant par absorption (11),
(t) inclusion de la chaleur d'adsorption par le fluide de régénération,
(u) écoulement du fluide de régénération réchauffé vers le côté chaud d'une source de chaleur (21),
(v) nouveau réchauffage du fluide de régénération dans la source de chaleur (21),
(w) écoulement du fluide de régénération chauffé à travers les canaux de sorption d'un premier échangeur de chaleur fonctionnant par absorption (10),
(x) évaporation de l'adsorbat incorporé dans le premier échangeur de chaleur fonctionnant par absorption (10) et inclusion de cet adsorbat par le fluide de régénération,
(y) écoulement du fluide de régénération humide dans une zone externe.

2. Procédé selon la revendication 1, de l'air évacué provenant de la zone à conditionner étant utilisé comme fluide de régénération.

3. Procédé selon la revendication 1 ou 2, un refroidissement du deuxième échangeur de chaleur fonctionnant par absorption étant effectué après l'étape (1), écoulement du fluide de régénération humide dans une zone externe, et avant l'étape (m), interruption de l'écoulement du fluide de procédé et du fluide de régénération dans le premier échangeur de chaleur fonctionnant par absorption.

4. Procédé selon la revendication 3, le refroidissement du deuxième échangeur de chaleur fonctionnant par absorption (11) étant obtenu à l'aide d'un passage à travers l'échangeur de chaleur du fluide de régénération pour le deuxième échangeur de chaleur (11), du fluide de procédé à conditionner et/ou de l'air externe.

5. Procédé selon au moins l'une des revendications 1 à 4, le procédé étant mis en œuvre de manière cyclique.

6. Procédé selon au moins l'une des revendications 1 à 5, des pompes de chaleur à base d'installations de compresseur (20) étant utilisées comme source de chaleur ou de froid.

7. Dispositif de climatisation destiné au conditionnement d'un fluide présentant
- un premier échangeur de chaleur fonctionnant par absorption (10), qui présente des canaux de sorption dans au moins un sens d'écoulement et des canaux d'échangeur de chaleur dans au moins un sens d'écoulement,
- une source de chaleur-froid (21, 22), agencée en aval du premier échangeur de chaleur fonctionnant par absorption (10), dans le sens d'écoulement des canaux de sorption, et en aval du premier échangeur de chaleur fonctionnant par absorption (10) dans le sens d'écoulement des canaux d'échangeur de chaleur, destinée à évacuer de la chaleur et à inclure de la chaleur et
- un deuxième échangeur de chaleur fonctionnant par absorption (11), agencé en aval de la source de chaleur-froid (21, 22), destiné à inclure de la chaleur, qui présente des canaux de sorption dans un moins un sens d'écoulement et qui présente des canaux d'échangeur de chaleur dans au moins un sens d'écoulement, les canaux de sorption du deuxième échangeur de chaleur (11) étant agencés en aval et dans le sens d'écoulement des canaux d'échangeur de chaleur du premier échangeur de chaleur (10) .

8. Dispositif de climatisation selon la revendication 7, **caractérisé en ce que** les échangeurs de chaleur (10, 11) et les sources de chaud-froid (21, 22) sont reliés par l'intermédiaire de conduites tubulaires fixes et/ou de tuyaux flexibles.

9. Dispositif de climatisation selon la revendication 7 ou 8, le dispositif ne contenant pas de pièces rotatives.

10. Dispositif de climatisation selon au moins l'une des revendications 7 à 9, des éléments qui divisent et/ou réalisent un écoulement laminaire de l'écoulement d'air étant insérés en amont des échangeurs de chaleur.

11. Dispositif de climatisation selon au moins l'une des revendications 7 à 10, le matériau d'adsorption présentant une densité de 0,2 à 2 g/cm³ et des matériaux à réseau organométallique et/ou du carbone modifié étant utilisés comme matériau d'adsorption dans les canaux de sorption.

12. Dispositif de climatisation selon la revendication 7, des matériaux à réseau organométallique (MOF) du groupe suivant A520, MIL-160, MOF-841, UIO-66, DUT-67 et/ou MOF-801 étant utilisés comme matériau d'adsorption dans les canaux de sorption.

13. Dispositif de climatisation selon au moins l'une des revendications 7 à 12, des échangeurs de chaleur à écoulement croisé étant utilisés.

14. Utilisation du dispositif de climatisation selon au moins l'une des revendications 7 à 12 pour le conditionnement de fluides dans des bâtiments et des véhicules ainsi que dans des hôpitaux et/ou des laboratoires.

15. Élément de façade comportant un dispositif de climatisation selon au moins l'une des revendications 7 à 13.
